# EUROPÄISCHE PATENTSCHRIFT

(11) **EP 1 230 058 B1**
(45) Veröffentlichungstag und Bekanntmachung des Hinweises auf die Patenterteilung: **22.10.2003**
(21) Anmeldenummer: 00985010.8
(22) Anmeldetag: 11.11.2000
(51) Int. Cl.: B23B 51/02

(54) **BOHRERSPITZE UND VERFAHREN ZUM SCHLEIFEN EINER BOHRERSPITZE**
DRILL BIT AND METHOD FOR GRINDING A DRILL BIT
MECHE ET PROCEDE D'AFFUTAGE D'UNE MECHE

(30) Priorität: 16.11.1999 DE 19955172
(43) Veröffentlichungstag der Anmeldung: 14.08.2002
(73) Patentinhaber: KENNAMETAL INC., Latrobe, PA 15650-0231 (US)
(72) Erfinder: BORSCHERT, Bernhard, 96050 Bamberg (DE); MÜHLFRIEDEL, Dieter, 91320 Ebermannstadt (DE)
(74) Vertreter: Tergau & Pohl Patentanwälte
(86) Internationale Anmeldenummer: EP0011174
(87) Internationale Veröffentlichungsnummer: WO01036134

(56) Entgegenhaltungen:
- EP-A- 0 127 322
- EP-A- 0 333 651
- DE-A- 3 619 245
- US-A- 5 273 380
- BEITZ, KOTTNER: 'Dubbel', 1983, SPRINGER-VERLAG, BERLIN Seite 995

## Beschreibung

Die Erfindung betrifft eine Bohrerspitze gemäß dem Oberbegriff von Anspruch 1 sowie ein Verfahren zum Schleifen einer Bohrerspitze gemäß dem Oberbegriff von Anspruch 6, die über eine Querschneide verbundene Hauptschneiden aufweist, an die sich jeweils eine Freifläche anschließt, die in eine Spannut übergeht (siehe DE 3 619 245).

Derartige Bohrerspitzen werden insbesondere für Spiralbohrer verwendet, bei denen der durch die Bohrerspitze abgetragene Span über wendelförmig verlaufende Spannuten des Bohrers abgetragen wird. Bohrerspitze und Bohrer sind hierzu einstückig oder zweistückig ausgebildet. Bei der zweistückigen Ausbildung ist die Bohrerspitze insbesondere als austauschbarer Einsatz für einen Bohrergrundkörper ausgebildet.

Die geometrische Ausgestaltung und insbesondere der Schliff der Bohrerspitze bestimmt in erheblichem Umfang die Schneidwirkung des Bohrers sowie die mechanische Belastung des Bohrers, insbesondere der Bohrerspitze. Die mechanische Belastung beim Bohren wird unter anderem durch die Ausgestaltung des Bereichs um die Querschneide mitbestimmt. Zur Verringerung der Belastung wird beim Schleifen daher in der Regel eine Ausspitzung der Querschneide vorgenommen. Mit der Ausspitzung wird im Bereich des Bohrerkerns der sogenannte Spanwinkel bestimmt, der den Winkel zwischen der sich an die Querschneide anschließenden Fläche und der Bohrerlängsachse definiert. Die Fläche wird im folgenden als Querschneidenfläche bezeichnet. Insbesondere wird der Spanwinkel in dem der Hauptschneide abgewandten Bereich der Querschneide bestimmt, wo die der Hauptschneide zugeordnete Freifläche in die Spannut übergeht. In diesem Bereich wird oftmals ein positiver Spanwinkel gewünscht. Ein positiver Spanwinkel bedeutet hierbei, dass die Querschneidenfläche auf die Bohrerlängsachse zugekippt ist, so dass ein Art Überhang gebildet ist. Bei einem negativem Spanwinkel ist demgegenüber diese Fläche von der Bohrerachse weggekippt.

Bei herkömmlichen Schleifverfahren mit Ausspitzung werden in einem ersten Verfahrensschritt die Hauptschneiden und die Querschneide sowie die sich an die Hauptschneiden anschließenden Freiflächen geschliffen. In einem zweiten Arbeitsschritt wird dann die Ausspitzung vorgenommen. Hierzu ist es erforderlich, dass die zum Schleifen vorgesehene Schleifscheibe erneut angesetzt wird. Dies führt dazu, dass sowohl in die Freifläche als auch in die Querschneidenfläche eine Kante, also eine Unstetigkeit, hineingeschliffen wird. Die Kante in der Querschneidenfläche wird zwangsläufig ausgebildet, da unter allen Umständen vermieden werden muss, dass die Schleifscheibe beim Ausspitzen bis an die bereits geschliffene Querschneide reicht. Diese Kante im Bereich der Querschneide bewirkt, dass Spannungsspitzen auftreten, die zu einer erhöhten Belastung der Bohrerspitze führen.

Neuere Entwicklungstendenzen gehen dahin, die Bohrerspitze ohne Schleifen über ein Metallspritzgußverfahren herzustellen.

Der vorliegenden Erfindung liegt die Aufgabe zugrunde, eine Bohrerspitze derart auszugestalten, dass die beim Bohren auftretenden mechanischen Belastungen gering gehalten werden.

Die Aufgabe wird gemäß der Erfindung gelöst durch eine Bohrerspitze, die insbesondere zwei über eine Querschneide miteinander verbundene Hauptschneiden aufweist, an die sich jeweils eine Freifläche anschließt, die in eine Spannut übergeht, wobei die Freifläche als eine von der Hauptschneide in Richtung zur Spannut kantenfrei gekrümmte Oberfläche mit einem Krümmungsradius R ausgebildet ist.

Eine derartige Bohrerspitze weist den wesentlichen Vorteil auf, dass aufgrund der kantenfrei gekrümmten Oberfläche mit dem Krümmungsradius R, also aufgrund eines ansatzlosen Verlaufs der Oberfläche, die Belastung der Bohrerspitze beim Bohrer gering ist. Insbesondere treten keine Spannungsspitzen im Bereich der Querschneidenfläche auf, wie sie bei herkömmlich geschliffenen Bohrerspitzen auftreten.

Weitere bevorzugte Ausführungsformen der Bohrerspitze sind in den Unteransprüchen niedergelegt.

Die Bohrerspitze ist bevorzugt eine geschliffene Bohrerspitze. Alternativ lässt sich die bechriebene Geometrie der Bohrerspitze beispielsweise auch mit einem Metall-Spritzguss-Verfahren erreichen.

in einer besonders vorteilhaften Ausgestaltung ist die Bohrerspitze als austauschbarer Einsatz für einen Bohrergrundkörper ausgebildet. Ein derartiger, zweiteiliger Bohrer, bestehend aus Bohrerspitze und Bohrergrundkörper, hat den wesentlichen Vorteil, dass die verschleißanfällige Bohrerspitze in einfacher Weise ausgetauscht werden kann. Der Bohrergrundkörper ist in der Regel einem wesentlich geringerem Verschleiß ausgesetzt, so dass dessen Lebensdauer die der Bohrerspitze um ein Vielfaches übersteigt. Durch die Ausbildung der Bohrerspitze als austauschbarer Einsatz sind daher insbesondere die Betriebskosten deutlich reduziert. Nicht zuletzt kann hierzu vorgesehen sein, den Bohrergrundkörper aus einem kostengünstigeren, und damit in der Regel weicherem Material auszubilden als die Bohrerspitze.

Die Aufgabe wird gemäß der Erfindung weiterhin gelöst durch ein Verfahren zum Schleifen einer Bohrerspitze, welche insbesondere zwei über eine Querschneide verbundene Hauptschneiden aufweist, an die sich jeweils eine Freifläche anschließt, die in eine Spannut übergeht, wobei eine zum Schleifen verwendete Schleifscheibe und die Bohrerspitze in einem kontinuierlichen Schleifvorgang derart zueinander geführt werden, dass die Freifläche als eine von der Hauptschneide in Richtung zur Spannut gekrümmte Oberfläche mit einem Krümmungsradius ausgebildet wird.

Die Schleifscheibe und die Bohrerspitze werden dabei also in einem komplexen dreidimensionalen Schleifvorgang derart zueinander geführt, dass die Bohrerspitze in gewünschter Art und Weise geschliffen wird, ohne dass zwei Schleifvorgänge notwendig sind. Insbesondere treten aufgrund des kontinuierlichen Schleifvorgangs keine Kanten im Bereich der Freifläche und der Querschneidenfläche auf, die bei einem zweistufigem Schleifvorgang zwangsläufig ausgebildet werden. Durch die dreidimensionale Führung von Bohrerspitze und Schleifscheibe werden also die bisher üblichen zwei Schleifschritte in einem Schleifschritt zusammengefasst. Dies zeigt sich nicht zuletzt in der Krümmung der Freifläche. Aufgrund des ansatzlosen und kantenfreien Verlaufs der geschliffenen Flächen der Bohrerspitze ist die Belastung der Bohrerspitze beim Bohren gering gehalten.

Für eine möglichst geringe Belastung der Bohrerspitze wird das Verfahren vorzugsweise derart durchgeführt, dass sich ein Krümmungsradius zwischen dem 0,05-und dem 0,5-fachen des Bohrerdurchmessers ergibt.

Zur Ausbildung der gekrümmten Freifläche umfasst die Schleifscheibe eine Hauptschleiffläche, die relativ zur Bohrerspitze um einen Einschwenkwinkel verschwenkt wird. Diese Schwenkbewegung kann entweder von der Bohrerspitze oder von der Schleiffläche oder von beiden gemeinsam vollzogen werden. Bei dieser Schwenkbewegung wird der als Einschwenkwinkel bezeichnete Winkel zwischen der Flächennormalen der Hauptschleiffläche und der Längsachse der Bohrerspitze verkleinert.

Zur Ausbildung einer geeignete Bohrerspitzengeometrie wird die Bohrerspitze bevorzugt zunächst um ihre Längsachse bis zu einem Drehwinkel gedreht, und erst anschließend erfolgt das Einschwenken um den Einschwenkwinkel. Hierdurch wird erreicht, dass die sich unmittelbar an die Hauptschneide anschließende Freifläche, die sogenannte Hauptfreifläche, zunächst schräg verläuft und anschließend in Richtung zur Spannut zunehmend abgekrümmt ist.

Für eine möglichst homogene Ausbildung der gekrümmten Oberfläche wird während des Einschwenkens um den Einschwenkwinkel α die Bohrerspitze gleichzeitig bis zu einem vorbestimmten Drehendwinkel weitergedreht.

In einer besonders zweckdienlichen Ausführung wird eine Nebenschleiffläche der Schleifscheibe und die Bohrerspitze zu ihrer Ausspitzung im Bereich der Querschneide relativ zueinander um einen Spanwinkel verschwenkt. Diese Nebenschleiffläche grenzt an der Hauptschleiffläche der Schleifscheibe an, und mit ihr wird die Querschneidenfläche, also der Übergang von Querschneide zur Freifläche, geschliffen.

Der Verlauf dieser Fläche relativ zu der Längsachse der Bohrerspitze gibt dabei den sogenannten Spanwinkel (Querschneidenspanwinkel) an. Zur Ausbildung des Spanwinkels wird die komplette Schleifscheibe gegenüber der Längsachse der Bohrerspitze verschwenkt.

Bevorzugt sind die Schwenkbewegungen um den Einschwenkwinkel und um den Spanwinkel einander überlagert. Die Schleifscheibe wird also gleichzeitig um zwei Winkel verschwenkt. Die Schwenkbewegung um den Einschwenkwinkel erfolgt dabei um eine Schwenkachse, die von der Querschneide etwa radial nach außen läuft, und die Schwenkbewegung um den Spanwinkel erfolgt um einen Schwenkachse, die etwa tangential zur Querschneide verläuft. Durch die Überlagerung dieser beiden Schwenkbewegungen ist gewährleistet, dass zum einen eine geeignete Ausspitzung vorgenommen wird, und dass zum anderen die geschliffenen Flächen homogen ineinander übergehen. Insbesondere geht die Querschneidenfläche homogen, also absatz- und kantenfrei, in die Freifläche über.

Vorzugsweise wird der Spanwinkel zwischen einem positiven Spanwinkel von +5° und einem negativen Spanwinkel von -5° eingestellt. Der Vorteil des beschriebenen Verfahrens ist insbesondere bei der Ausbildung eines positiven Spanwinkels zu sehen, da dieser mit dem beschriebenen Verfahren problemlos erzielt werden kann.

Für die Ausbildung einer geeigneten Bohrspitzengeometrie liegt der Einschwenkwinkel zwischen 30° und 60° und beträgt insbesondere etwa 50° Der Drehwinkel liegt vorzugsweise zwischen 60 % und 90 % und beträgt insbesondere etwa 80% des Drehendwinkels. Dieser liegt typischerweise in einem Bereich zwischen 90° und 140°.

Um die Querschneide in geeigneter Weise anzuschleifen ragt beim Beginn des Schleifvorgangs in einer bevorzugten Ausführung die Schleifscheibe über die Bohrermitte hinaus, so dass die Schleifscheibe eine übermittige Schleifposition einnimmt. Anschließend wird die Bohrerspitze und die Schleifscheibe in eine untermittige Schleifposition geführt, in der die Schleifscheibe vor der Bohrermitte endet. In der untermittigen Schleifposition erfolgt dann der Schliff der Freifläche sowie die Ausspitzung.

Die im Hinblick auf das Verfahren aufgeführten Vorteile sowie die besonderen Ausführungsformen lassen sich sinngemäß auf die Bohrerspitze übertragen.

Ein Ausführungsbeispiel der Erfindung wird im Folgenden anhand der Figuren näher erläutert. Es zeigen jeweils in schematischen Darstellungen:
- Fig. 1: eine Bohrerspitze geschliffen nach einem herkömmlichen Verfahren,
- Fig. 2: eine Bohrerspitze, die nach dem erfindungsgemäßen Verfahren geschliffen ist,
- Fig. 3: eine Bohrer- und eine Schleifscheibe in einer Anfangsposition zu Beginn des Schleifvorgangs in einer perspektivischen Darstellung,
- Fig. 4: den Bohrer und die Schleifscheibe in einer Mittelposition während des Schleifvorgangs, ebenfalls in einer perspektivischen Darstellung,
- Fig. 5: den Bohrer und die Schleifscheibe in einer Endposition nach dem Schleifvorgang, ebenfalls in einer perspektivischen Darstellung,
- Fig. 6: eine Seitenansicht des Bohrers und der Schleifscheibe,
- Fig. 7: eine im Vergleich zur Fig. 6 um 90° gedrehte Seitenansicht des Bohrers und der Schleifscheibe, und
- Fig. 8: einen Bohrer mit austauschbarer Bohrerspitze.

In den Figuren sind gleichwirkende Teile jeweils mit dem gleichen Bezugszeichen versehen.

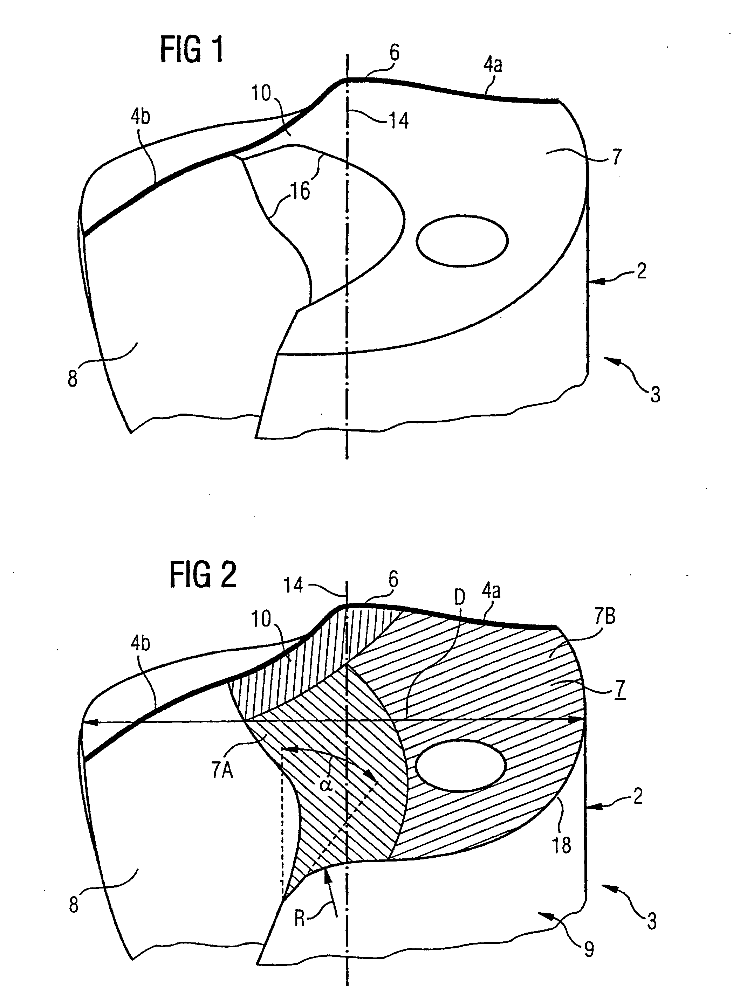

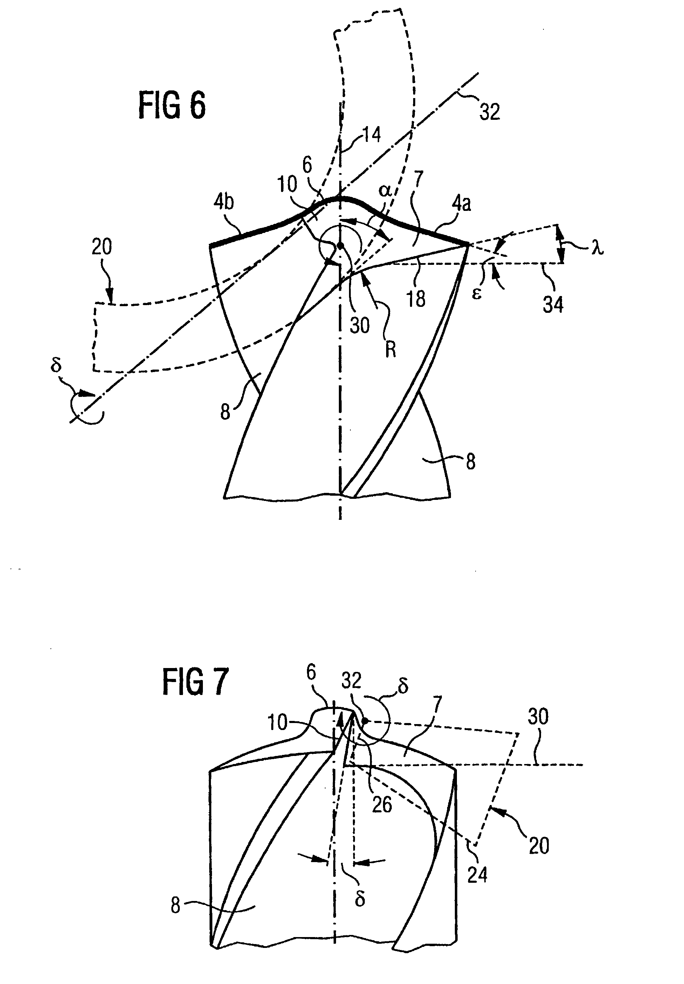

In den Figuren 1 und 2 sind eine Bohrerspitze 2 eines Spiralbohrers 3, welche nach einem herkömmlichen Verfahren geschliffen ist (Fig. 1) und eine, die nach dem neuen Verfahren geschliffen ist (Fig. 2) einander gegenüber gestellt. Die Bohrerspitze 2 weist zwei Hauptschneiden 4a,4b auf, die über eine in etwa S-förmig ausgebildete Querschneide 6 miteinander verbunden sind. Die Hauptschneiden 4a,4b und die Querschneide 6 sind zur besseren Übersicht in den Figuren mit einer breiteren Strichstärke dargestellt. Die durch die Hauptschneiden 4a,4b und Querschneide 6 gebildete Schneide erstreckt sich über die gesamte Bohrerspitze 2. Die Bohrerspitze 2 ist spiegelsymmetrisch ausgebildet. Im Folgenden wird die Bohrerspitze 2 anhand einer der beiden spiegelsymmetrischen Seiten erläutert und zwar ausgehend von der Hauptschneide 4a. An diese schließt sich eine Freifläche 7 an, die bis zu einer Spannut 8 reicht. Die Spannut 8 beginnt bereits in der Bohrerspitze 2 und verläuft im sich an die Bohrerspitze 2 anschließenden Spannutbereich 9 des Bohrers 3 wendelförmig. Die sich an die Hauptschneide 4 anschließende Freifläche 7 ist im Wesentlichen nach Art einer Kegelfläche ausgebildet. Von der Querschneide 6 erstreckt sich ebenfalls eine als Querschneidenfläche 10 bezeichnete Fläche zu der Spannut 8. Die Querschneidenfläche 10 und die Freifläche 7 gehen ineinander über. Bei der sogenannten Ausspitzung der Bohrerspitze 2 wird insbesondere die Querschneidenfläche 10 geschliffen. Hierbei wird die Winkelbeziehung zwischen dieser Fläche 10 und der Längsachse 14 der Bohrerspitze 2 eingestellt. Der entsprechende Winkel wird als Spanwinkel δ bezeichnet (vgl. hierzu insbesondere Fig. 7).

Beim herkömmlichen Schleifverfahren wird zur Ausspitzung die Schleifscheibe in einem zweiten Verfahrensschritt neu angesetzt und an die Querschneidenfläche 10, insbesondere im Bereich in dem die Querschneide 6 in die zweite Hauptschneide 4b übergeht, herangeführt. Um eine Berührung der Schleifscheibe mit der bereits geschliffenen Querschneide 6 und der Hauptschneide 4b zu verhindern, muss zu diesen beiden Schneiden (4b,6) ein gewisser Sicherheitsabstand eingehalten werden. In der geschliffenen Bohrerspitze 2 zeigt sich dies darin, dass die Querschneidenfläche 10 einen Knick bzw. eine Kante 16 aufweist. Sie erstreckt sich bis in die Freifläche 7 hinein. Diese knickt also bei der Kante 16 zur Spannut 8 hin ab. An dieser Kante 16, insbesondere im Bereich der Querschneidenfläche 10, treten beim Bohren unerwünscht hohe mechanische Belastungen auf.

Aufgrund des kontinuierlichen dreidimensionalen Schleifvorgangs gemäß dem neuen Schleifverfahren ist eine solche Kante 16 bei der Bohrerspitze 2 gemäß Fig. 2 vermieden. Die Querschneidenfläche 10 geht vielmehr homogen in die Freifläche 7 über, und beide reichen knick- und kantenfrei bis zur Spannut 8. Für die nach dem neuen Verfahren geschliffene Bohrerspitze 2 ist neben dem kantenfreien Verlauf zudem charakteristisch, dass die Freifläche 7 von der Hauptschneide 4a zur Spannut 8 hin gekrümmt ist und einen Krümmungsradius R aufweist. Dieser liegt vorzugsweise zwischen dem 0,05- und dem 0,5-fachen des Bohrerdurchmessers D. Zur Illustration der einzelnen Schleifbereiche ist die Freifläche 7 in zwei unterschiedlich schraffierte Teilbereiche 7A und 7B unterteilt, wobei der Teilbereich 7A im Wesentlichen den gekrümmten Bereich der Freifläche 7 angibt. Als dritter Schleifbereich ist weiterhin die Querschneidenfläche 10 ebenfalls schraffiert dargestellt. Alle drei Schleifbereiche (10,7A,7B) werden in einem kontinuierlichen Schleifvorgang geschliffen und gehen homogen ineinander über. Die am Umfang der Bohrerspitze 2 verlaufende Außenlinie 18 der Freifläche 7 bildet - projiziert auf die Längsachse 14 - mit dieser im Bereich des Übergangs zur Spannut 8 einen Einschwenkwinkel α, der vorzugsweise zwischen 30° und 60° liegt (zur Definition des Einschwenkwinkels α vgl. auch insbesondere die Figuren 6 und 7).

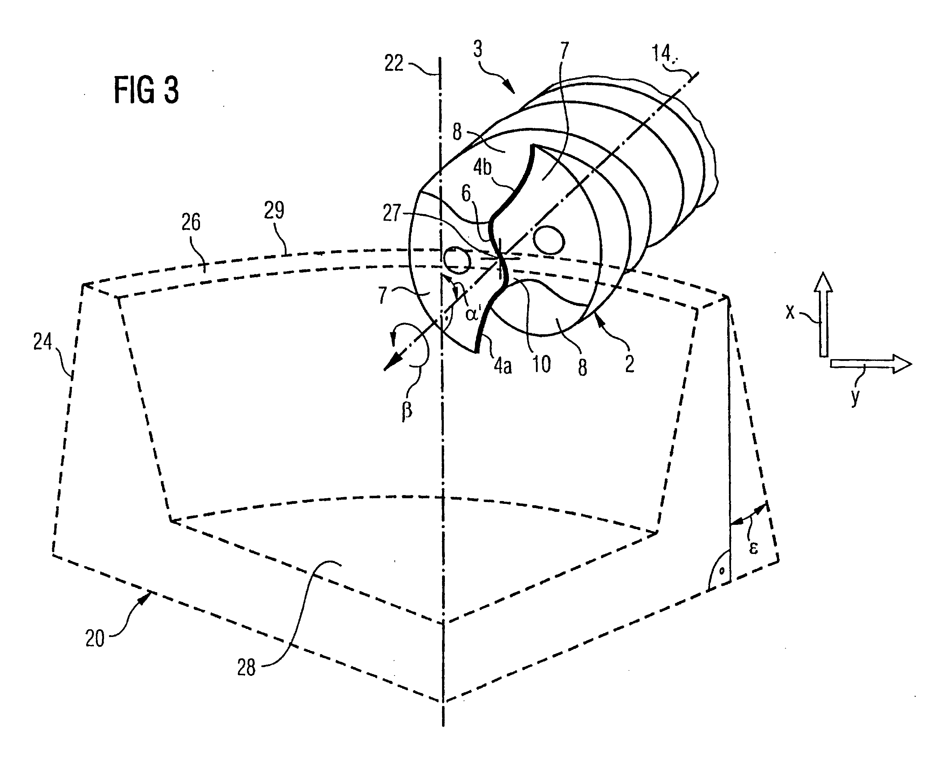

Das neuartige Schleifverfahren wird im Folgenden anhand der Figuren 3 bis 5 näher erläutert, in denen die Relativposition zwischen einer Schleifscheibe 20 und der Bohrerspitze 2 jeweils in einer perspektivischen Darstellung und in unterschiedlichen Schleifpositionen dargestellt ist. Für den im Folgenden beschriebenen dreidimensionalen Schleifvorgang ist die Relativbewegung zwischen der Bohrerspitze 2 und der Schleifscheibe 20 maßgebend. Der Einfachheit halber wird der Schleifvorgang entweder durch die Bewegung der Bohrerspitze 2 oder durch Bewegung der Schleifscheibe 20 ausgedrückt. Es versteht sich von selbst, dass die jeweilige Bewegung auch von dem jeweils anderen Teil sinngemäß ausgeführt werden kann. Die Schleifscheibe 20 ist in den Figuren 3 bis 5 zur besseren Übersicht jeweils nur ausschnittsweise und gestrichelt dargestellt.

Gemäß der in Fig. 3 dargestellten Anfangsposition ist die Längsachse 14 der Bohrerspitze 2 unter einem Winkel α' zu einer Mittelachse 22 der Schleifscheibe 20 ausgerichtet, der zu Beginn des Schleifens 90° beträgt. Die Schleifscheibe 20 weist einen Rand mit einer im Querschnitt gesehen trapezförmige Geometrie auf, wobei die eine Trapezaußenseite als eine Hauptschleiffläche 24 und die sich an diese Seitenfläche anschließende Stirnfläche als eine Nebenschleiffläche 26 ausgebildet ist. Die Hauptschleiffläche 24 geht unter Ausbildung einer Krümmung in die Nebenschleiffläche 26 über. Diese Krümmung definiert im Wesentlichen einen gerundeten Übergang zwischen der Querschneidenfläche 10 und der Freifläche 7. Die radiale Ausdehnung der Hauptschleifscheibe 26 ist größer als der Bohrerradius, so dass sie die Freifläche 7 vollständig überdeckt. Dieser ringförmige Schleifkörper sitzt mit seiner Trapezgrundfläche auf einem scheibenförmigen Träger 28 auf und bildet mit diesem die Schleifscheibe 20. Die Schleifscheibe 20 wird mittels des Trägers 28 in geeigneter Weise drehbar eingespannt.

Die Längsachse 14 ist durch die Spitze der Bohrerspitze 2, also der Bohrermitte 27 verlaufend eingezeichnet. Aus Fig. 3 ist zu entnehmen, dass die Hauptschleiffläche 24 im Bereich der Querschneide 6 über die Bohrermitte 27 hinausragt. Die Schleifscheibe 20 wird also zu Beginn des Schleifvorgangs übermittig angesetzt. Im Verlauf des Schleifvorgangs wird dann der Bohrer 3 entlang einer x-Achse in eine untermittige Position geführt. Die übermittige Anfangsposition dient zum Anschleifen der Querschneide 6, die zu Beginn des Schleifvorgangs annähernd senkrecht zu der Umfangslinie 29 der Nebenschleiffläche 26 gehalten ist. Zu Beginn des Schleifvorgangs wird die Hauptschneide 4a geschliffen. Der Bohrer wird dann um die Längsachse 14 um einen Drehwinkel β gedreht, so dass die sich an die Hauptschneide 4a anschließende Freifläche 7 geschliffen wird. Die Hauptschneide 4a sowie die Freifläche 7 fallen von der Bohrermitte 27 nach außen. Die Hauptschneide 4a und eine radiale Komponente der Freifläche 7 sind also zu einer gedachten Querschnittsebene 34 der Bohrerspitze 2 unter einem Winkel ε geneigt (vgl. hierzu auch Fig. 6). Bei der senkrechten Ausrichtung der Längsachse 14 zur Mittelachse 22 ist dieser Winkel ε bestimmt durch den Trapezwinkel ε zwischen der Hauptschleiffläche 24 und dem Lot auf die Trapezgrundfläche.

Zusätzlich zu der Drehbewegung um den Drehwinkel β und der Anfangsverschiebung entlang der x-Achse erfolgt ein Vorschub des Bohrers in Richtung der Längsachse 14 zur Schleifscheibe 20, so dass die Freifläche 7, und zwar ihre tangentiale Komponente, unter einem Winkel λ schräg zu der gedachten Querschnittsebene 34 des Bohrers 3 verläuft. Die Außenlinie 18 verläuft also ausgehend von der Hauptschneide 4a schräg fallend in Richtung zur Spannut 8 (vgl. Fig. 6).

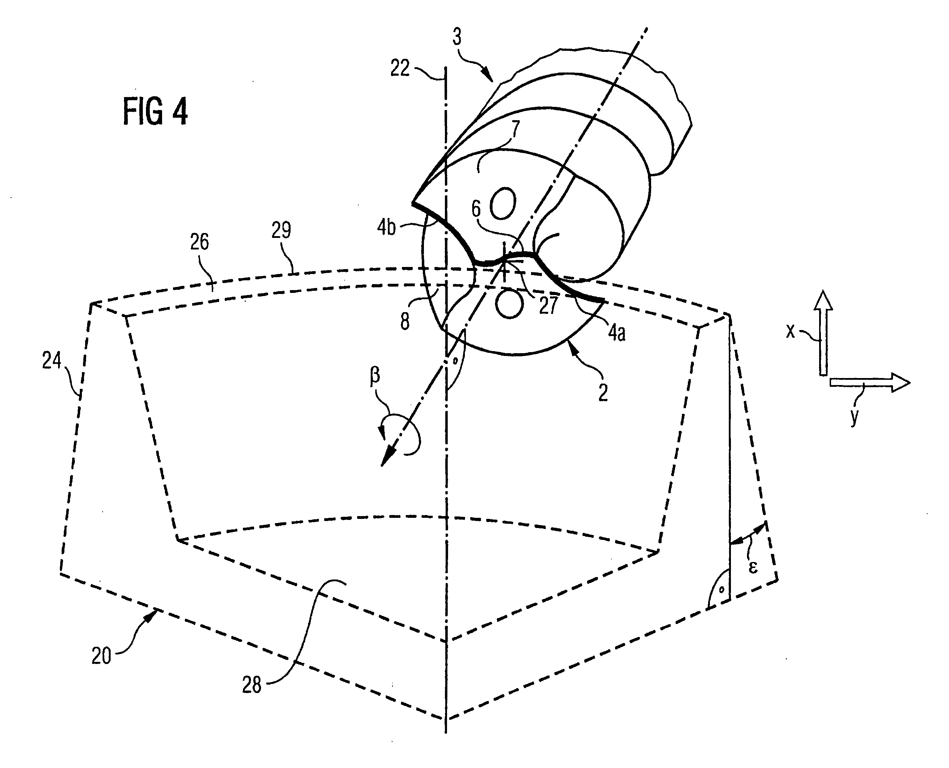

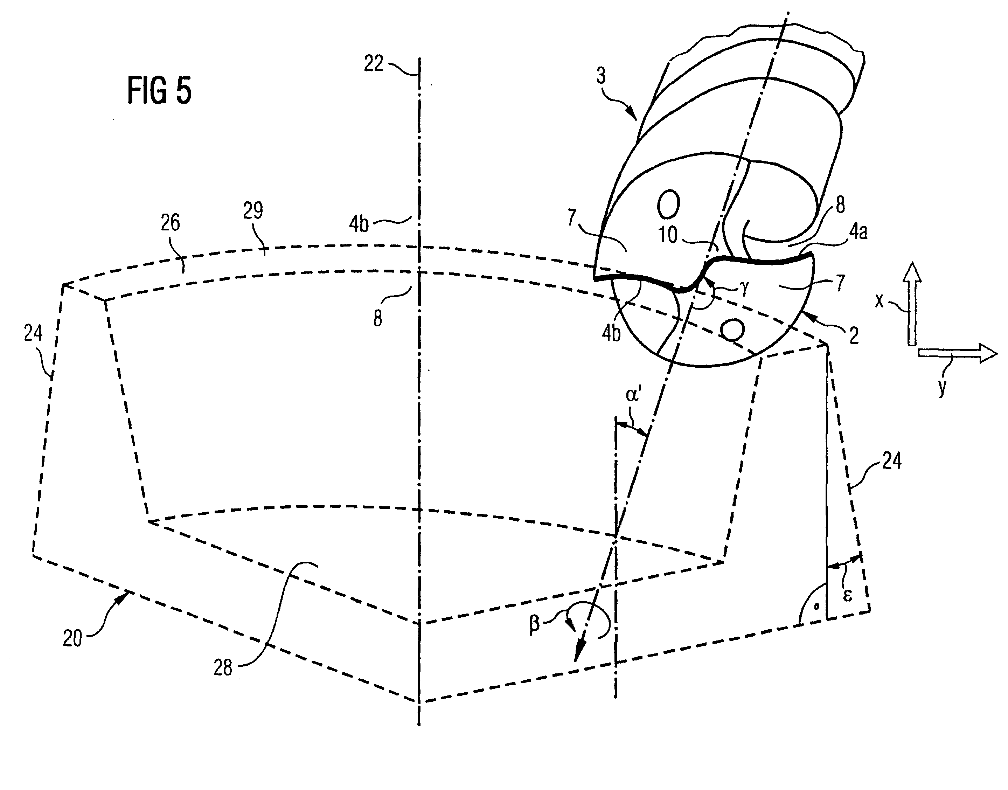

In der Mittelposition gemäß Fig. 4 befindet sich die Bohrerspitze 2 zu der Schleifscheibe 20 in einer untermittigen Schleifposition, d.h. die Querschneide 6 liegt neben der Nebenschleiffläche 26. Deren Umfangslinie 29 verläuft zu der Querschneide 6 nunmehr in etwa tangential. Der Schleifvorgang bis zu der dargestellten Mittelposition entspricht im Wesentlichen einem herkömmlichen Schleifverfahren. Das neue Verfahren zeichnet sich dadurch aus, dass ausgehend von der Mittelposition die Bohrerspitze 2 einerseits bezüglich der Hauptschleiffläche 24 und andererseits bezüglich der Nebenschleiffläche 26 verschwenkt wird. Das Verschwenken bezüglich der Hauptschleiffläche 24 erfolgt um den Einschwenkwinkel α um eine Hauptachse 30, und das Einschwenken bezüglich der Nebenschleiffläche 26 erfolgt um den Spanwinkel δ um eine Nebenachse 32, wie es den Figuren 6 und 7 zu entnehmen ist. Durch das Einschwenken um den Einschwenkwinkel α wird der mit dem Einschwenkwinkel α verbundene Winkel α' zwischen Längsachse 14 und Mittelachse 22 verringert. Dies ist aus Fig. 5 zu entnehmen, aus der deutlich wird, dass der Bohrer 3 nunmehr unter einem spitzen Winkel α' zu der Mittelachse 22 ausgerichtet ist, nachdem er ursprünglich zu Beginn des Schleifvorgangs zu der Mittelachse 22 senkrecht ausgerichtet war.

Die Figuren 6 und 7 dienen zur Verdeutlichung der Schwenkbewegung, die zwischen dem Bohrer 3 und der Schleifscheibe 20 beim Übergang von der Mittelposition in die Endposition vorgenommen werden. Die Schleifscheibe 20 ist der besseren Übersicht halber wiederum gestrichelt und nur ausschnittsweise in einer schematischen Seitenansicht dargestellt. Fig. 6 zeigt dabei eine Seitenansicht, in der die Blickrichtung im Wesentlichen senkrecht zur Querschneide 6 erfolgt und Fig. 7 zeigt eine Seitenansicht, in der die Blickrichtung in etwa in Längsrichtung der Querschneide 6 verläuft.

Aus Fig. 6 ist zu entnehmen, dass die Hauptschneide 4a unter dem Winkel ε zu einer gedachten Querschnittsebene 34 der Bohrerspitze 2 verläuft. Weiterhin ist zu entnehmen, dass die Umfangslinie 18 der Freifläche 7 beginnend von der Hauptschneide 4a zunächst schräg unter dem Winkel λ in Richtung zur Spannut 8 verläuft, und dann eine Krümmung mit dem Krümmungsradius R aufweist. Zur Ausbildung dieser Krümmung wird die Schleifscheibe 20 mit ihrer Hauptschleiffläche 24 um die Hauptachse 30 um den Einschwenkwinkel α geschwenkt. Dieser ist definiert als der Winkel zwischen Längsachse 14 und der tangentialen Komponente der Hauptschleiffläche 24.

Vorzugsweise wird gleichzeitig die Schleifscheibe 20 um die Nebenachse 32 um den Spanwinkel δ zur Ausbildung eines Spanwinkels im Bereich der Querschneide 6 geschwenkt. Vorzugsweise wird für die Querschneidenfläche 10 ein positiver Spanwinkel δ von bis zu +5° eingestellt. Hierbei wird die Querschneidenfläche 10 mittels der Nebenschleiffläche 26 derart geschliffen, dass sie eine Art Überhang bildet, wie aus Fig. 7 zu entnehmen ist. Der Spanwinkel δ legt den Winkel zwischen Nebenschleiffläche 26 und Längsachse 14 fest. Wegen der festen Winkelbeziehung zwischen den beiden Schleifflächen 24,26 wird der Spanwinkel δ durch die Ausrichtung der radialen Komponente der Hauptschleiffläche 24 zu der Längsachse 14 bestimmt.

Zusammenfassend lässt sich der bevorzugte Schleifvorgang in folgende Schritte gliedern:
1. Beginn des Schleifvorgangs in einer übermittigen Schleifposition bei einem Drehwinkel β, wobei die Längsachse 14 senkrecht zur Mittelachse 22 ausgerichtet ist (Anfangsposition, Fig. 3).
2. Bewegung des Bohrers 3 in eine untermittige Schleifposition enttang der x-Achse. Gleichzeitig erfolgt ein Vorschub in Richtung der Längsachse 14 sowie eine Drehbewegung um diese bis zu einem Drehwinkel β von etwa 80% des Drehendwinkels γ. Hierbei kann gleichzeitig eine translatorische Verschiebung des Bohrers entlang einer y-Achse erfolgen, die senkrecht zur x-Achse verläuft. x-Achse und Mittelachse 22 verlaufen parallel. (Mittelposition, Fig. 4) Beim Übergang von der Anfangsposition in die Mittelposition werden also 3 Bewegungskomponenten überlagert.
3. Weiterdrehung des Bohrers 3 bis zum Endwinkel γ, so dass der Bohrer 3 in etwa eine 120°-Drehung beginnend von der Anfangsposition ausführt. Gleichzeitig erfolgt weiterhin der Vorschub in Richtung der Längsachse 14 sowie die Bewegung entlang der x-Achse, und zusätzlich erfolgt ein Einschwenken um den Einschwenkwinkel α sowie um den Spanwinkel δ. Insgesamt werden also im letzten Arbeitsschritt bis zum Erreichen der Endposition 5 Bewegungskomponenten überlagert.

Das Einschwenken um den Spanwinkel δ gemäß Punkt 3 ist hierbei fakultativ. Die Ausbildung eines Spanwinkels δ richtet sich nach dem Einsatzzweck, für den der Bohrer 3 vorgesehen ist. Das Verfahren erlaubt den Spanwinkel δ in einfacher Weise und sehr flexibel einzustellen. Der entscheidende Vorteil des Verfahrens ist darin zu sehen, dass der Schleifvorgang in einem kontinuierlichen Verfahren durchgeführt wird, und ein zweites Ansetzen der Schleifscheibe mit den damit verbundenen zwangsläufig auftretenden kantenartigen Übergängen im Bereich der Freifläche 7 und der Querschneidenfläche 10 vermieden ist.

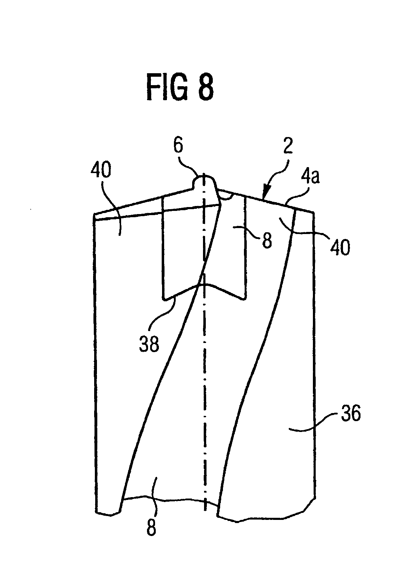

Der Bohrer 3 ist gemäß Fig. 8 vorzugsweise zweiteilig aufgebaut und weist hierzu einen Bohrergrundkörper 36 auf, der an seinem stirnseitigen Ende eine Ausnehmung 38 aufweist, in die die entsprechend ausgeformte Bohrerspitze 2 insbesondere austauschbar eingesetzt werden kann. Die Bohrerspitze 2 wird im Bohrergrundkörper 36 beispielsweise durch eine Klemmkraft, die von zwei Schenkeln 40 ausgeübt wird, gehalten. Alternativ oder zusätzlich wird die Bohrerspitze 2 über eine nicht dargestellte Arretierung im Grundkörper 36 fixiert. Die im Bohrergrundkörper 36 verlaufende Spannut 8 erstreckt sich in die Bohrerspitze 2 hinein. Diese Ausgestaltung mit austauschbarer Bohrerspitze 2 ermöglicht die Betriebsmittelkosten für das Bohrerwerkzeug gering zu halten, da das Bauteil, welches den höchsten mechanischen Belastungen ausgesetzt ist, als Austauschteil ausgebildet ist.

### Bezugszeichenliste

- 2: Bohrerspitze
- 4a,4b: Hauptschneiden
- 6: Querschneide
- 7: Freifläche
- 8: Spannut
- 10: Fläche
- 9: Spannutbereich
- 14: Längsachse
- 16: Kante
- 18: Außenlinie
- 20: Schleifscheibe
- 22: Mittelachse
- 24: Hauptschleiffläche
- 26: Nebenschleiffläche
- 27: Bohrermitte
- 28: Träger
- 29: Umfangslinie
- 30: Hauptachse
- 32: Nebenachse
- 34: Querschnittsebene
- 36: Grundkörper
- 38: Ausnehmung

## Patentansprüche

1. Bohrerspitze (2), die Ober eine Querschneide (6) miteinander verbundene Hauptschneiden (4a,4b) aufweist, an die sich jeweils eine Freifläche (7) anschließt, die in eine Spannut (8) übergeht,
**dadurch gekennzeichnet,**
**dass** die Freifläche (7) zwei Teilbereiche (7A,7B) aufweist, die homogen und kantenfrei ineinander übergehen, wobei der zur Spannut (8) verlaufende Teilbereich (7A) als gekrümmte Oberfläche mit einem Krümmungsradius (R) ausgebildet ist, und dass die Freifläche (7) am Übergang zur Spannut (8) mit der Längsachse (14) einen Einschwenkwinkel (α) bildet, der etwa zwischen 30° und 60° liegt.

2. Bohrerspitze (2) nach Anspruch 1,
**dadurch gekennzeichnet,**
**dass** der Krümmungsradius (R) zwischen dem 0,05 - und dem 0,5 - fachen des Bohrerdurchmessers (D) liegt

3. Bohrerspitze (2) nach Anspruch 1 oder 2,
**dadurch gekennzeichnet,**
**dass**, und der Einschwenkwinkel (α) etwa 50° beträgt.

4. Bohrerspitze (2) nach einem der Ansprüche 1 bis 3,
**dadurch gekennzeichnet,**
**dass** der Spanwinkel (δ) zwischen + 5° und -5° liegt.

5. Bohrerspitze (2) nach einem der Ansprüche 1 bis 4,
**dadurch gekennzeichnet,**
**dass** sie als austauschbarer Einsatz für einen Bohrergrundkörper (36) ausgebildet ist.

6. Verfahren zum Schleifen einer Bohrerspitze (2), die über eine Querschneide (6) verbundene Hauptschneiden (4a,4b) aufweist, an die sich jeweils eine Freifläche (7) anschließt, die in eine Spannut (8) übergeht,
**dadurch gekennzeichnet,**
**dass** eine Schleifscheibe (20) und die Bohrerspitze (2) in einem kontinuierlichen Schleifvorgang derart zueinander geführt werden, dass die Freifläche (7) von der Hauptschneide (4a,4b) zur Spannut (8) kantenfrei verlaufend und in einem Teilbereich (7A) als gekrümmte Oberfläche mit einem Krümmungsradius (R) ausgebildet wird, indem die Längsachse (14) der Bohrerspitze und eine Mittelachse (22) der Schleifscheibe (20) relativ zueinander um einen Einschwenkwinkel (α) verschwenkt werden.

7. Verfahren nach Anspruch 6,
**dadurch gekennzeichnet,**
**dass** der Krümmungsradius R zwischen dem 0,05 - und dem 0,5 - fachen des Bohrerdurchmessers (D) liegt.

8. Verfahren nach Anspruch 6 oder 7,
**dadurch gekennzeichnet,**
**dass** die Bohrerspitze (2) zunächst um ihre Längsachse (14) bis zu einem Drehwinkel (β) gedreht wird, und anschließend das Einschwenken um den Einschwenkwinkel (α) erfolgt.

9. Verfahren nach Anspruch 8,
**dadurch gekennzeichnet,**
**dass** während des Einschwenkens die Bohrerspitze (2) um ihre Längsachse (14) bis zu einem Drehendwinkel (γ) weitergedreht wird.

10. Verfahren nach einem der Ansprüche 6 bis 9,
**dadurch gekennzeichnet,**
**dass** eine Nebenschleiffläche (26) der Schleifscheibe (20) und die Bohrerspitze (2) zur Ausspitzung der Bohrerspitze (2) im Bereich der Querschneide (6) relativ zueinander um einen Spanwinkel (δ) verschwenkt werden.

11. Verfahren nach einem der Ansprüche 6 bis 10,
**dadurch gekennzeichnet,**
**dass** die Schwenkbewegungen um den Einschwenkwinkel (α) und um den SpanWinkel (δ) überlagert sind.

12. Verfahren nach Anspruch 10 oder 11,
**dadurch gekennzeichnet,**
**dass** der Spanwinkel (δ) zwischen + 5° und -5° liegt.

13. Verfahren nach einem der Ansprüche 6 bis 12,
**dadurch gekennzeichnet,**
**dass** der Einschwenkwinkel (α) zwischen 30° und 60° liegt, und insbesondere etwa 50° beträgt.

14. Verfahren nach einem der Ansprüche 8 bis 13,
**dadurch gekennzeichnet,**
**dass** der Drehwinkel (β) zwischen 60% und 90%, und insbesondere etwa 80% des Drehendwinkels (γ) beträgt.

15. Verfahren nach einem der Ansprüche 6 bis 14,
**dadurch gekennzeichnet,**
**dass** beim Beginn des Schleifvorgangs die Schleifscheibe (20) über die Bohrermitte (27) hinausragt, so dass eine übermittige Schleifposition vorliegt, und dass anschließend Bohrerspitze (2) und Schleifscheibe (20) in eine untermittige Schleifposition geführt werden, in der die Schleifscheibe vor der Bohrermitte endet.

## Claims

1. Drill bit (2) which has main cutting edges (4a, 4b) which are connected to one another via a chisel edge (6) and adjoining which in each case is a flank (7) which merges into a flute (8), **characterized in that** the flank (7) has two sections (7A, 7B) which merge into one another homogeneously and without edges, the section (7A) which runs to the flute (8) being formed as a curved surface having a radius of curvature (R), and **in that** the flank (7), at the transition to the flute (8), forms a swivel-in angle (α) with the longitudinal axis (14), this swivel-in angle (α) being approximately between 30° and 60°.

2. Drill bit (2) according to Claim 1, **characterized in that** the radius of curvature (R) is between 0.05 times and 0.5 times the drill diameter (D).

3. Drill bit (2) according to Claim 1 or 2, **characterized in that** the swivel-in angle (α) is about 50°.

4. Drill bit (2) according to one of Claims 1 to 3, **characterized in that** the rake angle (δ) is between +5° and -5°.

5. Drill bit (2) according to one of Claims 1 to 4, **characterized in that** it is designed as an interchangeable insert for a drill parent body (36).

6. Method of grinding a drill bit (2) which has main cutting edges (4a, 4b) which are connected via a chisel edge (6) and adjoining which in each case is a flank (7) which merges into a flute (8), **characterized in that** a grinding wheel (20) and the drill bit (2) are guided in a continuous grinding operation relative to one another in such a way that the flank (7) is formed such as to run from the main cutting edge (4a, 4b) to the flute (8) without edges and in one section (7A) as a curved surface having a radius of curvature (R), by the longitudinal axis (14) of the drill bit and a centre axis (22) of the grinding wheel (20) being swivelled relative to one another by a swivel-in angle (α).

7. Method according to Claim 6, **characterized in that** the radius of curvature (R) is between 0.05 times and 0.5 times the drill diameter (D).

8. Method according to Claim 6 or 7, **characterized in that** the drill bit (2) is first of all rotated about its longitudinal axis (14) up to a rotation angle (β) and then the swivelling-in by the swivel-in angle (α) is effected.

9. Method according to Claim 8, **characterized in that** the drill bit (2) is rotated further about its longitudinal axis (14) up to a final rotation angle (γ) during the swivelling-in.

10. Method according to one of Claims 6 to 9, **characterized in that** a secondary grinding surface (26) of the grinding wheel (20) and the drill bit (2) are swivelled relative to one another by a rake angle (δ) for the web thinning of the drill bit (2) in the region of the chisel edge (6).

11. Method according to one of Claims 6 to 10, **characterized in that** the swivel movements by the swivel-in angle (α) and by the rake angle (δ) are superimposed.

12. Method according to Claim 10 or 11, **characterized in that** the rake angle (δ) is between +5° and -5°.

13. Method according to one of Claims 6 to 12, **characterized in that** the swivel-in angle (α) is between 30° and 60°, and in particular about 50°.

14. Method according to one of Claims 8 to 13, **characterized in that** the rotation angle (β) is between 60% and 90%, and in particular about 80%, of the final rotation angle (γ).

15. Method according to one of Claims 6 to 14, **characterized in that**, at the start of the grinding operation, the grinding wheel (20) projects beyond the drill centre (27), so that there is an above-centre grinding position, and **in that** subsequently the drill bit (2) and the grinding wheel (20) are guided into a below-centre grinding position, in which the grinding wheel ends in front of the drill centre.

## Revendications

1. Mèche de foret (2) qui comprend des tranchants principaux (4a, 4b) reliés l'un à l'autre via un tranchant transversal (6), auxquels se raccorde une surface en dépouille respective (7) qui se transforme en une rainure à copeaux (8),
**caractérisée en ce que** la surface en dépouille (7) comprend deux zones partielles (7A, 7B) qui se transforment l'une en l'autre de façon homogène et sans arêtes, la zone partielle (7A) s'étendant vers la rainure à copeaux étant réalisée sous forme de surface recourbée avec un rayon de courbure (R), et **en ce que** la surface en dépouille (7) forme avec l'axe longitudinal (14), à la transition vers la rainure à copeaux (8), un angle de pivotement (α) qui est compris approximativement entre 30° et 60°.

2. Mèche de foret (2) selon la revendication 1, **caractérisée en ce que** le rayon de courbure (R) est compris entre 0,05 et 0,5 fois le diamètre (D) du foret.

3. Mèche de foret (2) selon l'une ou l'autre des revendications 1 et 2, **caractérisée en ce que** l'angle de pivotement (α) est d'environ 50°.

4. Mèche de foret (2) selon l'une des revendications 1 à 3, **caractérisée en ce que** l'angle d'enlèvement de matière (δ) est compris entre +5° et -5°.

5. Mèche de foret (2) selon l'une des revendications 1 à 4, **caractérisée en ce qu'**elle est réalisée sous forme d'insert interchangeable pour un corps de base (36) du foret.

6. Procédé pour affûter une mèche de foret (2) qui comprend des tranchants principaux (4a, 4b) reliés l'un à l'autre via un tranchant transversal (6), auxquels se raccorde une surface en dépouille respective (7) qui se transforme en une rainure à copeaux (8), **caractérisé en ce qu'**une meule (20) et la mèche de foret (2) sont guidées l'une par rapport à l'autre dans une opération de meulage continue de telle sorte que la surface en dépouille (7) est réalisée de manière à s'étendre sans arête depuis le tranchant principal (4a, 4b) jusqu'à la rainure à copeaux (8) et dans une zone partielle (7A) sous forme de surface recourbée avec un rayon de courbure (R), du fait que l'axe longitudinal (14) de la mèche de foret et un axe central (22) de la meule (20) sont pivotés l'un par rapport à l'autre d'un angle de pivotement (α).

7. Procédé selon la revendication 6, **caractérisé en ce que** le rayon de courbure (R) est compris entre 0,05 et 0,5 fois le diamètre (D) du foret.

8. Procédé selon l'une ou l'autre des revendications 6 et 7, **caractérisé en ce que** l'on fait tourner la mèche de foret (2) tout d'abord autour de son axe longitudinal (14) jusqu'à un angle de rotation (β) et ensuite on effectue le pivotement de l'angle de pivotement (α).

9. Procédé selon la revendication 8, **caractérisé en ce que** pendant le pivotement, on continue à faire tourner la mèche de foret (2) autour de son axe longitudinal (14) jusqu'à un angle final de rotation (γ).

10. Procédé selon l'une des revendications 6 à 9, **caractérisé en ce que** l'on fait pivoter l'une par rapport à l'autre d'un angle d'enlèvement de matière (δ) une surface de meulage secondaire (26) de la meule (20) et la mèche de foret (2) pour affûter la mèche de foret (2) dans la zone du tranchant transversal (6).

11. Procédé selon l'une des revendications 6 à 10, **caractérisé en ce que** les mouvements de pivotement de l'angle de pivotement (α) et de l'angle d'enlèvement de matière (δ) sont superposés.

12. Procédé selon l'une ou l'autre des revendications 10 et 11, **caractérisé en ce que** l'angle d'enlèvement de matière (δ) est compris entre +5° et -5°.

13. Procédé selon l'une des revendications 6 à 12, **caractérisé en ce que** l'angle de pivotement (α) est compris entre 30° et 60°, et de préférence d'environ 50°.

14. Procédé selon l'une des revendications 8 à 13, **caractérisé en ce que** l'angle de rotation (β) est compris entre 60 % et 90 %, et en particulier d'environ 80 % de l'angle final de rotation (γ).

15. Procédé selon l'une des revendications 6 à 14, **caractérisé en ce qu'**au début de l'opération de meulage, la meule (20) dépasse au-delà du centre (27) du foret, de sorte qu'il se présente une position de meulage sur-centrale, et **en ce que** l'on amène ensuite la mèche de foret (2) et la meule (20) jusque dans une position de meulage sous-centrale dans laquelle la meule se termine en avant du centre du foret.
